# EUROPÄISCHE PATENTSCHRIFT

(11) **EP 2 969 459 B1**
(45) Veröffentlichungstag und Bekanntmachung des Hinweises auf die Patenterteilung: **03.01.2018**
(21) Anmeldenummer: 14719236.3
(22) Anmeldetag: 11.03.2014
(51) Int. Cl.: B29C 45/14

(54) **VERFAHREN ZUR HERSTELLUNG EINES PARTIKELSCHAUM-BAUTEILS**
METHOD FOR PRODUCING PARTICLE FOAM COMPONENT
PROCÉDÉ DE PRODUCTION POUR UNE PIÈCE EN MOUSSE

(30) Priorität: 12.03.2013 DE 102013004196
(43) Veröffentlichungstag der Anmeldung: 20.01.2016
(73) Patentinhaber: Krallmann Kunststoffverarbeitung GmbH, 32120 Hiddenhausen (DE)
(72) Erfinder: BREXELER, Ingo, 58300 Wetter/Ruhr (DE); ZEIFANG, Roland, 77790 Steinach (DE); DOLL, Thomas, 77704 Oberkirch (DE)
(74) Vertreter: Lichti - Patentanwälte Partnerschaft mbB
(86) Internationale Anmeldenummer: PCT/EP2014/000636
(87) Internationale Veröffentlichungsnummer: WO 2014/139667

(56) Entgegenhaltungen:
- WO-A1-02/04188
- Carl Hanser Verlag ET AL: "Geschäumte Rippen für dünnwandige Teile", , 30. September 2011 (2011-09-30), XP055126564, DOI: sa1274978 Gefunden im Internet: URL:https://www.kunststoffe.de/_storage/as set/536017/storage/master/file/5792005/dow nload/Geschäumte Rippen für dünnwandige Teile.pdf [gefunden am 2014-07-02]

## Beschreibung

Die Erfindung betrifft ein Verfahren zur Herstellung eines Partikelschaum-Bauteils gemäß dem Oberbegriff des Anspruchs 1.

Partikelschaum-Bauteile aus aufgeschäumtem Kunststoff, beispielsweise expandiertem Polystyrol (EPS) oder expandiertem Polypropylen (EPP) sind in verschiedenen Ausgestaltungen bekannt und finden in vielen Industriebereichen Verwendung, da sie wesentliche Vorteile hinsichtlich Gewicht und Isolierung, insbesondere Wärmeisolierung besitzen. Sie werden beispielsweise in der Automobilindustrie vielfach zur Gewichtseinsparung gegenüber metallenen Bauteilen oder als Isolier-Bauteil gegen Schall, Wärme oder mechanische Belastung eingesetzt. Nachteilig dabei ist jedoch, dass das ästhetische Erscheinungsbild der Oberflächen nicht ansprechend ist und üblicherweise den Ansprüchen von Designern nicht genügt. Um diesen Ansprüchen gerecht zu werden, ist es bekannt, ein Partikelschaum-Bauteil mit einer nachträglichen Deckschicht aus Metall, Kunststoff oder Stoff zu versehen. Die Deckschicht aus Metall, Kunststoff oder Stoff wird entweder nachträglich auf das Partikelschaum-Bauteil aufgeklebt oder durch spezielle Halterungen und insbesondere Clips am Partikelschaum-Bauteil befestigt.

Seit einiger Zeit ist es bekannt, ein Partikelschaum-Bauteil nachträglich mit einem Kunststoffmaterial, insbesondere einem thermoplastischen Elastomer zumindest bereichsweise zu überspritzen. Zu diesem Zweck wird das Partikeschaum-Bauteil in eine Spritzgussmaschine eingelegt, wobei zwischen dem Partikelschaum-Bauteil und dem Spritzgusswerkzeug ein Hohlraum verbleibt, und ein niedrigviskoser Kunststoff wird mit hoher Temperatur und unter hohem Druck in den Hohlraum eingespritzt.

Der plastifizierte Kunststoff füllt in Form einer Schmelze den Hohlraum zwischen dem Partikelschaum-Bauteil und der Formwand des Spritzgusswerkzeugs aus. Aufgrund der unregelmäßigen porigen Oberflächenstruktur des Partikelschaum-Bauteils tritt der flüssige Kunststoff undefiniert in die oberflächennahen Bereiche der Struktur des Partikelschaum-Bauteils ein. Dabei entstehen undefinierte Materialanhäufungen in den oberflächennahen Zonen der Struktur des Partikelschaum-Bauteils und somit ungleichmäßige Querschnitte der aufgebrachten thermoplastischen Deckschicht. Dies ist bei kleinen Partikelschaum-Bauteilen oder bei Partikelschaum-Bauteilen, die für einen Benutzer unsichtbar eingebaut werden, noch akzeptabel, bei großen, sichtbaren Partikelschaum-Bauteilen fällt die Unregelmäßigkeit im Laufe der Zeit jedoch auf und ist in ästhetischer Hinsicht sehr störend.

In der WO2002/04188 A1, von der im Oberbegriff des Patentanspruchs 1 ausgegangen wird, ist ein Verfahren zur Herstellung eines Partikelschaum-Bauteils offenbart, das einen Schaumkörper besitzt, der zumindest oberflächlich miteinander verschmolzene und eine geschlossene Oberfläche bildende Polymerschaumpartikel umfasst. Dabei wird die verdichtete Oberflächenstruktur des Schaumkörpers allein dadurch erreicht, dass die Polymerschaumpartikel aufgeschmolzen und dadurch miteinander verschmolzen werden, so dass die geschlossene Oberfläche erreicht ist. Nach dem Ausbilden des Schaumkörpers und der geschlossenen Oberfläche wird eine polymere Deckschicht in flüssiger Phase unter Druck in dem Formhohlraum eingebracht, wobei sich die Deckschicht stoffschlüssig mit dem Schaumkörper verbindet. Anschließend wird das so hergestellte Bauteil abgekühlt und aus dem Formwerkzeug entnommen.

Durch die thermische Ausbildung der Deckschicht ist dabei nicht sichergestellt, dass diese bei Herstellung einer Vielzahl von entsprechenden Bauteilen immer die gleichen Abmessungen und Eigenschaften besitzt.

In dem Fachartikel "Geschäumte Rippen für dünnwandige Teile" aus "Kunststoff 9/2011" (Karl Hanser Verlag) ist ein Formwerkzeug mit einem Stempel gezeigt, der zur Vergrößerung der Kavität vor dem Aufschäumen zurückgezogen wird. Wegen des Zurückziehens kann der Stempel zur Bildung der verdichteten Oberflächenstruktur nicht beitragen.

Der Erfindung liegt die Aufgabe zugrunde, ein Verfahren zur Herstellung eines Partikelschaum-Bauteils zu schaffen, das mit einer Deckschicht gleichmäßiger Dicke reproduzierbar herstellbar ist.

Diese Aufgabe wird durch ein Verfahren mit den Merkmalen des Anspruchs 1 gelöst.

Dabei ist ebenfalls vorgesehen, dass in den die Deckschicht tragenden Oberflächenbereichen des Schaumkörpers vor dem Aufbringen der Deckschicht eine verdichtete Oberflächenstruktur ausgebildet wird, wobei die Deckschicht mit der verdichteten Oberflächenstruktur stoffschlüssig verbunden wird.

Durch die Verdichtung ist die ursprüngliche offenporige Struktur des Schaumkörpers zu einer homogenen geschlossenen Struktur umgebildet. Aufgrund der verdichteten, geschlossenporigen Oberflächenstruktur kann der Schmelzfluss des aufgespritzten thermoplastischen Kunststoffs gleichmäßig und reproduzierbar erfolgen. Dies führt zu einem Partikelschaum-Bauteil mit einer definierten Dicke der aufgespritzten Deckschicht. Die stoffschlüssige Verbindung der Deckschicht mit der verdichteten Oberflächenstruktur des Schaumkörpers gewährleistet einen sicheren, vollflächigen Halt der Deckschicht auf dem Schaumkörper, ohne dass es dazu der Verwendung von Haftmitteln etc. bedarf.

Das Ausbilden der verdichteten Oberflächenstruktur des Schaumkörpers wird durch Einwirken einer äußeren Druckkraft auf den Schaumkörper erreicht. Dabei ist vorzugsweise vorgesehen, dass diejenigen Oberflächenbereiche des Schaumkörpers, auf die die Druckkraft einwirkt, zumindest bereichsweise vor und/oder während der Aufbringung der Druckkraft aufgeschmolzen werden. Durch das Aufschmelzen und die Aufbringung der Druckkraft wird eine Verdichtung des Materials und gleichzeitig eine glatte Außenoberfläche erreicht.

Die Druckkraft kann beispielsweise mittels eines Stempels aufgebracht werden. Der Stempel kann auch gleichzeitig der Erwärmung und dem Aufschmelzen der Oberflächenbereiche des Schaumkörpers dienen, indem der Stempel erwärmt wird. Zu diesem Zweck kann in dem Stempel eine Heizvorrichtung angeordnet sein.

In besonders bevorzugter Ausgestaltung der Erfindung ist vorgesehen, dass der Stempel von einem verstellbaren Formteil des Werkzeugs gebildet ist.

In einer möglichen Ausgestaltung der Erfindung kann vorgesehen sein, dass die verdichtete Oberflächenstruktur des Schaumkörpers direkt beim Aufschäumen des Schaumkörpers in dem Werkzeug ausgebildet wird. Dies ist beispielsweise möglich, indem die Wandung des Werkzeugs abschnittsweise auf eine vorbestimmte Temperatur eingestellt wird, so dass der sich in dem Werkzeug beim Aufschäumen bildende Partikelschaum an dieser Wandung des Werkzeugs schmilzt, so dass die Schaumpartikel in diesem Bereich der Oberfläche miteinander verschmelzen und eine geschlossene, verdichtete Oberflächenstruktur bilden.

Vorzugsweise ist jedoch vorgesehen, dass die verdichtete Oberflächenstruktur des Schaumkörpers erst nach dem Aufschäumen des Schaumkörpers ausgebildet wird. Dies kann in dem gleichen Werkzeug erfolgen, in dem der Schaumkörper auch aufgeschäumt wird, es ist jedoch auch möglich, den Schaumkörper in eine andere Arbeitsstation umzusetzen.

Nachdem an dem Schaumkörper in denjenigen Oberflächenbereichen, in denen die Deckschicht aufgebracht werden soll, die verdichtete Struktur ausgebildet ist, wird auf den Schaumkörper in einem Spritzgusswerkzeug die Deckschicht vorzugsweise aus einem thermoplastischen Elastomer aufgespritzt. Dabei wird die Deckschicht mit der verdichteten Oberflächenstruktur des Schaumkörpers stoffschlüssig verbunden. Zu diesem Zweck kann in Weiterbildung der Erfindung vorgesehen sein, dass die verdichtete Oberflächenstruktur des Schaumkörpers zumindest bereichsweise vor und/während der Aufbringung der Deckschicht aufgeschmolzen oder zumindest angeschmolzen wird.

Es ist vorgesehen, die Deckschicht aus dem vorzugsweise thermoplastischen Kunststoff nicht direkt auf den aufgeschäumten Schaumkörper aufzubringen, sondern diejenigen Oberflächenbereiche des Schaumkörpers, die mit der Deckschicht versehen werden sollen, werden vor der Aufbringung der Deckschicht verdichtet. Dabei kann beispielsweise vorgesehen sein, dass die Schaumporen zur Bildung der verdichteten Oberflächenstruktur miteinander verschmolzen sind und eine geschlossene Oberfläche bilden. Auf diese Weise ist verhindert, dass der flüssige thermoplastische Kunststoff bei der Aufbringung, d.h. bei dem Aufspritzen, in den Schaumkörper eindringt. Somit ist durch die verdichtete Oberflächenstruktur des Schaumkörpers sichergestellt, dass die Deckschicht eine gleichmäßige vorbestimmte Dicke aufweist.

Die stoffschlüssige Verbindung der Deckschicht mit der verdichteten Oberflächenstruktur des Schaumkörpers gewährleistet einen sicheren, vollflächigen Halt der Deckschicht auf dem Schaumkörper, ohne dass es dazu der Verwendung von Haftmitteln etc. bedarf.

Zusätzlich dazu kann die Deckschicht mit der verdichteten Oberflächenstruktur des Schaumkörpers jedoch auch formschlüssig und/oder kraftschlüssig verbunden sein.

Vorzugsweise ist das Kunststoffmaterial der Deckschicht ein thermoplastisches Elastomer.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine schematische Darstellung eines Werkzeugs zum Aufschäumen eines Schaumkörpers,
- Fig. 2: das Werkzeug gemäß Fig. 1 mit aufgeschäumtem Schaumkörper,
- Fig. 3: das Werkzeug gemäß Fig. 2 nach Ausbildung der verdichteten Oberflächenstruktur,
- Fig. 4: das Werkzeug gemäß Fig. 3 nach Öffnen des Werkzeugs,
- Fig. 5: das Werkzeug gemäß Fig. 4 bei Entnahme des Schaumkörpers,
- Fig. 6: den Schaumkörper mit verdichteter Oberflächenstruktur,
- Fig. 7: ein Spritzgusswerkzeug mit eingesetztem Schaumkörper,
- Fig. 8: das Spritzgusswerkzeug gemäß Fig. 7 beim Schließen,
- Fig. 9: das geschlossene Spritzgusswerkzeug mit eingesetztem Schaumkörper,
- Fig. 10: das Spritzgusswerkzeug gemäß Fig. 9 mit angespritzter Deckschicht,
- Fig. 11: das geöffnete Spritzgusswerkzeug bei Entnahme des Partikelschaum-Bauteils und
- Fig. 12: das fertige Partikelschaum-Bauteil.

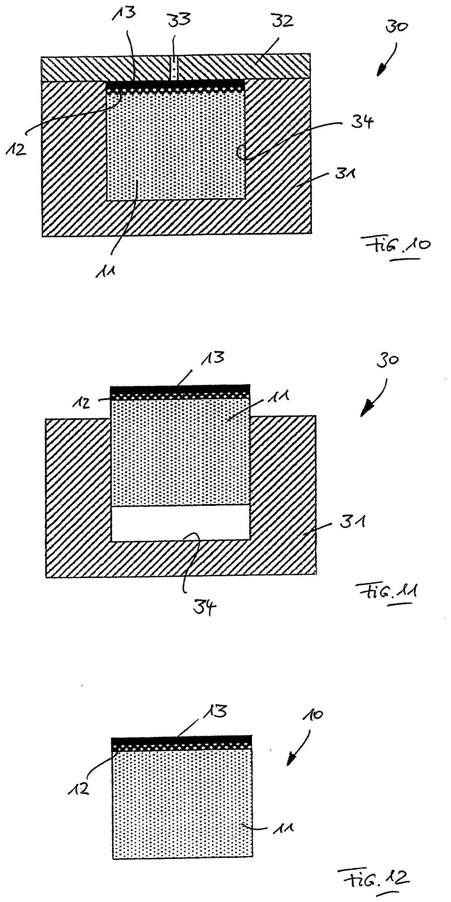

Figur 12 zeigt eine schematische Darstellung eines Partikelschaum-Bauteils 10, das aus einem Schaumkörper 11 aus EPP oder EPS besteht und auf einer Seite mit einer Deckschicht 13 aus einem thermoplastischen Elastomer versehen ist, wobei der Schaumkörper 11 in seinen die Deckschicht 13 tragenden Bereichen eine verdichtete Oberflächenstruktur 12 aufweist.

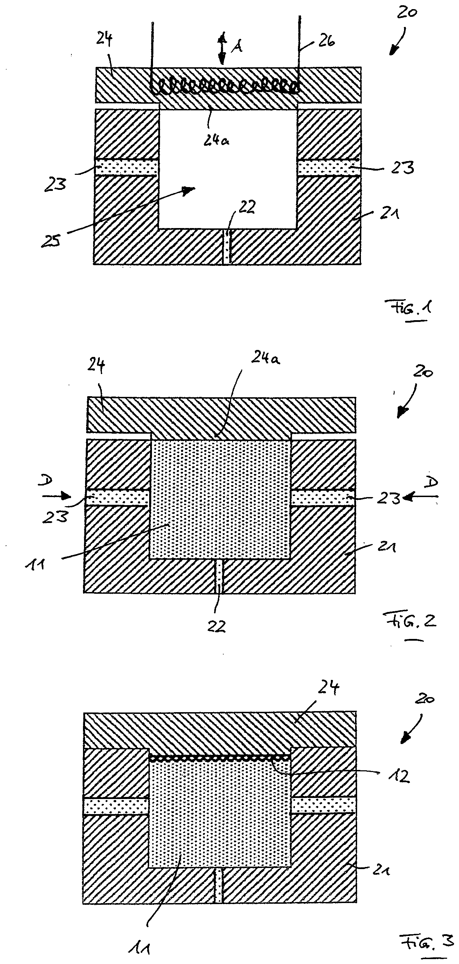

Im Folgenden soll anhand der Figuren 1 bis 11 das Verfahren zur Herstellung eines entsprechenden Partikelschaum-Bauteils 10 im Einzelnen erläutert werden:
Fig. 1 zeigt in schematischer Darstellung ein Werkzeug 20 mit einem behälterartigen unteren Formteil 21, in dem eine nur schematisch angedeutete Fülldüse 22 zur Einbringung von aufschäumbaren Kunststoffpartikeln und zwei Dampfdüsen 23 zur Einbringung von heißen Dampf in einen vom unteren Formteil 21 begrenzten Formhohlraum 25 vorgesehen sind. Der Formhohlraum 25 ist durch ein deckelartiges zweites Formteil 24 verschlossen, das mit einem stempelartigen Ansatz 24a in den Formhohlraum 25 einführbar ist. Das deckelartige zweite Formteil 24 ist relativ zum ersten Formteil 21 verstellbar, wie es durch den Doppelpfeil A angedeutet ist. Ferner kann das zweite Formteil 24 mittels einer beispielhaft dargestellten Heizvorrichtung 26 auf eine gewünschte Temperatur aufgeheizt werden.

In seiner Ausgangsstellung ist das zweite Formteil 24 mit seinem stempelartigen Ansatz 24a aus dem Formhohlraum 25 zurückgezogen, wie es in Fig. 1 gezeigt ist.

Das stempelartige zweite Formteil 24 wird durch Aktivierung der Heizvorrichtung 26 auf eine vorbestimmte Temperatur vorgeheizt und Partikel aus aufschäumbaren Kunststoff, insbesondere aus EPP oder EPS werden durch die Fülldüse 22 in den Formhohlraum 25 eingebracht. Durch die Dampfdüsen 23 wird heißer Dampf in den Formhohlraum 25 eingebracht (Pfeile D in Fig. 2), wodurch die Partikel aufschäumen und einen den gesamten Formhohlraum 25 ausbildenden Schaumkörper 11 bilden.

Nach einer vorbestimmten Verweilzeit des Schaumkörpers 11 in dem Formhohlraum 25 wird das verstellbare zweite Formteil 24 so verfahren, dass es mit seinem stempelartigen Ansatz 24a in den Formhohlraum 25 eintritt und den Schaumkörper 11 komprimiert und an der dem stempelartigen Ansatz 24a zugewandten Oberfläche aufgrund seiner erhöhten Wandungstemperatur aufschmilzt. Durch die aufschmelzende Grenzschicht des Schaumkörpers 11 und die Kompression infolge des stempelartigen Ansatzes 24a des zweiten Formteils 24 entsteht in den mit dem zweiten Formteil 24 in Kontakt kommenden Oberflächenbereichen des Schaumkörpers 11 eine verdichtete, geschlossenporige Oberflächenstrukur 12, wie es in Fig. 3 angedeutet ist.

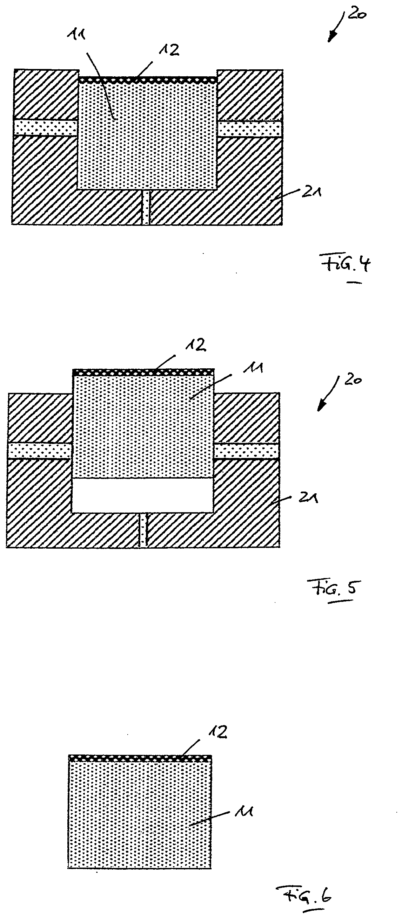

Nach einer vorgewählten Abkühlphase wird das deckelartige zweite Formteil 24 abgenommen und somit das Werkzeug 20 geöffnet (s. Fig. 4) und der Schaumkörper 11 mit oberseitig verdichteter Oberflächenstruktur 12 kann aus dem Werkzeug 20 entnommen werden (s. Fig. 5).

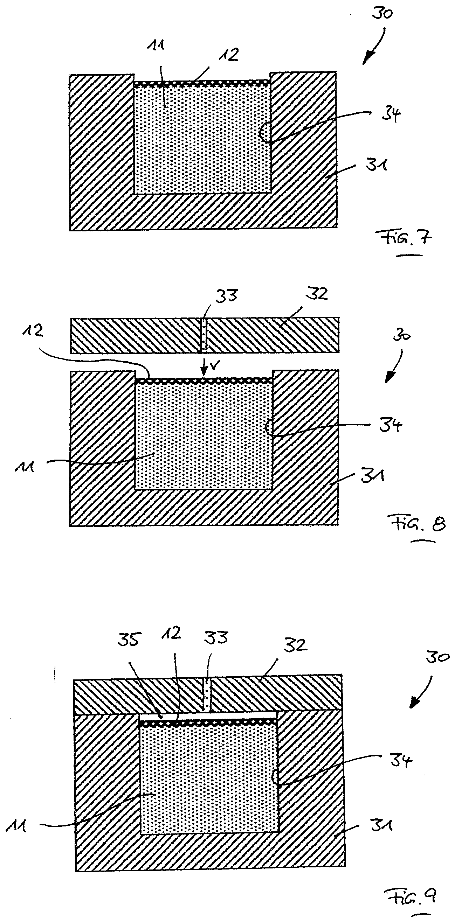

Auf den in Fig. 6 dargestellten Schaumkörper 11 mit verdichteter Oberflächenstruktur 12 wird anschließend in einem weiteren Verfahrensschritt die Deckschicht 13 aus einem thermoplastischen Kunststoff aufgespritzt, was im folgenden anhand der Fig. 7 bis 11 erläutert wird.

Fig. 7 zeigt ein schematisch dargestelltes Spritzgusswerkzeug 30 mit einem behälterartigen unteren ersten Formteil 31, das eine Kavität 34 definiert. Der Schaumkörper 11 mit verdichteter Oberflächenstruktur 12 kann in die Kavität 34 eingesetzt werden, wie es in Fig. 7 gezeigt ist.

Anschließend wird das Spritzgusswerkzeug 30 durch ein deckelartiges oberes zweites Formteil 32, in dem eine Spritzdüse 33 ausgebildet ist, verschlossen, wie es durch den Pfeil V in Fig. 8 angedeutet ist.

Fig. 9 zeigt das geschlossene Spritzgusswerkzeug 30 mit eingesetztem Schaumkörper 11, wobei die Kavität 34 etwas größer als der Schaumköper 11 ist, so dass zwischen der Oberseite des Schaumkörpers 11, d.h. zwischen der verdichteten Oberflächenstruktur 12 des Schaumkörpers 11 und dem zweiten Formteil 32 ein Hohlraum 35 gebildet ist.

In diesen Hohlraum 35 kann durch die Spritzdüse 33 ein thermoplastisches Elastomer eingespritzt werden, das die Deckschicht 13 bildet und mit der verdichteten Oberflächenstruktur 12 des Schaumkörpers 11 eine formschlüssige Verbindung eingeht.

Nach einer vorbestimmten Abkühlphase wird das Spritzgusswerkzeug 30 geöffnet und das Partikelschaum-Bauteil 10 mit dem Schaumkörper 11 und der thermoplastischen Deckschicht 13, die über die verdichtete Oberflächenstruktur 12 mit dem Schaumkörper 11 verbunden ist, kann aus dem Spritzgusswerkzeug entnommen werden (s. Fig. 11).

## Patentansprüche

1. Verfahren zur Herstellung eines Partikelschaum-Bauteils (10), das einen Schaumkörper (11) aufweist, der zumindest in Teilbereichen seiner Außenoberfläche mit einer Deckschicht (13) aus einem Kunststoffmaterial versehen ist, wobei der Schaumkörper (13) in einem Werkzeug (20) aufgeschäumt und die Deckschicht (13) in einem nachfolgenden Verfahrensschritt auf- oder angespritzt wird, wobei in den die Deckschicht (13) tragenden Oberflächenbereichen des Schaumkörpers (11) vor dem Aufbringen der Deckschicht (13) eine verdichtete Oberflächenstruktur (13) ausgebildet wird und die Deckschicht (13) mit der verdichteten Oberflächenstruktur (12) stoffschlüssig verbunden wird, **dadurch gekennzeichnet, dass** die verdichtete Oberflächenstruktur (12) des Schaumkörpers (11) durch Einwirken einer äußeren Druckkraft auf den Schaumkörper (11) ausgebildet wird.

2. Verfahren nach Anspruch 1, **dadurch gekennzeichnet, dass** diejenigen Oberflächenbereiche des Schaumkörpers (11), auf die die Druckkraft einwirkt, zumindest bereichsweise vor und/oder während der Aufbringung der Druckkraft aufgeschmolzen werden.

3. Verfahren nach Anspruch 1 oder 2, **dadurch gekennzeichnet, dass** die Druckkraft mittels eines Stempels aufgebracht wird.

4. Verfahren nach Anspruch 3, **dadurch gekennzeichnet, dass** der Stempel von einem verstellbaren Formteil (24) des Werkzeugs (20) gebildet ist.

5. Verfahren nach Anspruch 1, **dadurch gekennzeichnet, dass** die verdichtete Oberflächenstruktur (13) des Schaumkörpers (11) beim Aufschäumen des Schaumkörpers (11) ausgebildet wird.

6. Verfahren nach Anspruch 1, **dadurch gekennzeichnet, dass** die verdichtete Oberflächenstruktur (12) des Schaumkörpers (11) nach dem Aufschäumen des Schaumkörpers (11) ausgebildet wird.

7. Verfahren nach einem der Ansprüche 1 bis 6, **dadurch gekennzeichnet, dass** das die Deckschicht (13) bildende Kunststoffmaterial ein thermoplastisches Elastomer ist.

8. Verfahren nach einem der Ansprüche 1 bis 7, **dadurch gekennzeichnet, dass** die verdichtete Oberflächenstruktur (12) zumindest bereichsweise vor und/oder während der Aufbringung der Deckschicht (13) aufgeschmolzen wird.

## Claims

1. Method for producing a particle foam component (10), which has a foam body (11), which is provided with a cover layer (13) made of a plastic material at least in partial areas of its outer surface, wherein the foam body (13) is foamed in a mold (20) and the cover layer (13) is foamed or molded integrally in a subsequent method step, wherein a compressed surface structure (13) is formed in the surface areas of the foam body (11) supporting the cover layer (13) before applying the cover layer (13), and wherein the cover layer (13) is bonded in substance to the compressed surface structure (12), **characterized in that** the compressed surface structure (12) of the foam body (11) is formed by the action of an external force of pressure on the foam body (11).

2. Method in accordance with claim 7, **characterized in that** those surface areas of the foam body (11), on which the force of pressure acts, are melted on at least in some areas before and/or during the application of the force of pressure.

3. Method in accordance with claim 1 or 2, **characterized in that** the force of pressure is applied by means of a punch.

4. Method in accordance with claim 3, **characterized in that** the punch is formed by means of an adjustable mold part (24) of the mold (20).

5. Method in accordance with claim 1, **characterized in that** the compressed surface structure (13) of the foam body (11) is formed during the foaming of the foam body (11).

6. Method in accordance with claim 1, **characterized in that** the compressed surface structure (12) of the foam body (11) is formed after the foaming of the foam body (11).

7. Method in accordance with one of the claims 1 through 6, **characterized in that** the plastic material forming the cover layer (13) is a thermoplastic elastomer.

8. Method in accordance with one of the claims 1 through 7, **characterized in that** the compressed surface structure (12) is melted on in some areas before and/or during the application of the cover layer (13).

## Revendications

1. Procédé de production d'une pièce en mousse (10) comportant un corps en mousse (11) pourvu au moins dans certaines zones partielles de sa surface extérieure d'une couche de revêtement (13) en matière plastique, le corps en mousse (13) étant moussé dans un outil (20) et la couche de revêtement (13) étant injectée au-dessus d'elle ou contre elle lors d'une étape de procédé suivante, une structure superficielle (13) compactée étant réalisée dans les zones superficielles du corps en mousse (11) supportant la couche de revêtement (13) avant l'application de la couche de revêtement (13) et la couche de revêtement (13) étant reliée à la structure superficielle (12) compactée par complémentarité de matières, **caractérisé en ce que** la structure superficielle (12) compactée du corps en mousse (10) est réalisée par action d'une force de pression extérieure sur le corps en mousse (11).

2. Procédé selon la revendication 1, **caractérisé en ce que** les zones superficielles du corps en mousse (11) sur lesquelles la force de pression s'exerce sont foudues dessus au moins partiellement avant et/ou pendant l'application de la force de pression//impression.

3. Procédé selon la revendication 1 ou 2, **caractérisé en ce que** la force de pression est appliquée à l'aide d'un tampon.

4. Procédé selon la revendication 3, **caractérisé en ce que** le tampon est formé par une pièce moulée (24) mobile de l'outil (20).

5. Procédé selon la revendication 1, **caractérisé en ce que** la structure superficielle (13) compactée du corps en mousse (11) est réalisée lors du moussage du corps en mousse (11).

6. Procédé selon la revendication 1, **caractérisé en ce que** la structure superficielle (12) compactée du corps en mousse (11) est réalisée après le moussage du corps en mousse (11).

7. Procédé selon l'une quelconque des revendications 1 à 6, **caractérisé en ce que** la matière plastique formant la couche de revêtement (13) est un élastomère thermoplastique.

8. Procédé selon l'une quelconque des revendications 1 à 7, **caractérisé en ce que** la structure superficielle (12) compactée est fondue au moins partiellement avant et/ou pendant l'application de la couche de revêtement (13).
